# EUROPEAN PATENT SPECIFICATION

(11) **EP 4 613 983 B1**
(45) Date of publication and mention of the grant of the patent: **28.10.2026**
(21) Application number: 24218577.5
(22) Date of filing: 10.12.2024
(51) Int. Cl.: F01M 1/16, F16N 21/00

(54) **BEARING HOUSING STRUCTURE AND METHOD FOR AUTOMATICALLY ADJUSTING OIL INLET CHARACTERISTICS**
LAGERGEHÄUSESTRUKTUR UND VERFAHREN ZUM AUTOMATISCHEN EINSTELLEN DER ÖLEINGANGSEIGENSCHAFTEN
STRUCTURE DE BOÎTIER DE PALIER ET PROCÉDÉ DE RÉGLAGE AUTOMATIQUE DES CARACTÉRISTIQUES D'ENTRÉE D'HUILE

(30) Priority: 07.03.2024 CN 202410258289
(43) Date of publication of application: 10.09.2025
(73) Proprietor: CHINA SHIPBUILDING (CHONGQING) EQUIPMENT TECHNOLOGY CO., LTD., Chongqing City 402263 (CN)
(72) Inventor: HAO, Mengjiao, Chongqing City, 402263 (CN); ZHOU, Li, Chongqing City, 402263 (CN); LIU, Hongdan, Chongqing City, 402263 (CN); HE, Fuyong, Chongqing City, 402263 (CN); YAO, Zhangyong, Chongqing City, 402263 (CN); ZHOU, Jinhua, Chongqing City, 402263 (CN); YUAN, Yuan, Chongqing City, 402263 (CN); YANG, Gang, Chongqing City, 402263 (CN)
(74) Representative: Chung, Hoi Kan

(56) References cited:
- DE-A1- 3 923 239
- JP-A- H0 734 892
- US-A1- 2009 158 732
- US-A1- 2018 156 082

## Description

### TECHNICAL FIELD

The present invention relates to the technical field of engine superchargers, and in particular to a bearing housing structure and method for automatically adjusting oil inlet characteristics DE3923239 A1 discloses a bearing housing structure according to the prior art.

### BACKGROUND

In recent years, with the development of technology for high-strength diesel engines, stricter requirements have been put forward for cylinder lubrication. Usually, an oil pressure is increased to ensure that oil quickly reaches surfaces of parts to form a lubricating oil film in time so as to prevent rapid wear of the parts.

A standard oil pressure for a turbocharger usually ranges from 200 MPa to 450 MPa. Under such oil pressure, lubricating oil fills gaps between bearings, rotors and housings, and forms a lubricating oil film on inner and outer sides of floating bearings and on both sides of thrust bearings. A method of forced lubrication is adopted for the turbocharger, and the lubricating oil is introduced from a main oil passage of a diesel engine, and fluctuates with changes of pressure in the main oil passage. When the oil pressure exceeds the specified 450 MPa, and is greater than a gas pressure at ends of a turbine and a compressor, the lubricating oil is easily leaked from a sealing device towards the turbine and the compressor.

Oil leakage in the supercharger will reduce the oil pressure in an oil chamber of the supercharger, and cause damage to the supercharger bearings. Oil leaked to the turbine end will cause coking and carbon deposition under high temperatures, and lead to scratches and wear of related parts and components, thereby reducing performance and lifespan of the supercharger. Oil leaked to the compressor end will enter a cylinder along with supercharged air, degrade a combustion process of the diesel engine, reduce its performance, and cause the carbon deposition of combustion chamber parts, which will reduce the lifespan of the diesel engine.

### SUMMARY

An objective of the present invention is to provide a bearing housing structure and method for automatically adjusting oil inlet characteristics, so as to solve the problem of superchargers in the prior art that lubricating oil is easily leaked from a sealing device due to a high lubricating oil pressure.

In order to achieve the above objective, the present invention provides a bearing housing structure for automatically adjusting oil inlet characteristics. The bearing housing structure includes a bearing housing, an oil inlet limiting block, a guide cylinder and a spring; the bearing housing is provided with an oil inlet chamber, a compression chamber and an oil outlet, where the compression chamber is arranged between the oil inlet chamber and the oil outlet, and the guide cylinder is arranged in the oil inlet chamber; the guide cylinder is provided with an oil inlet flow channel and a spring chamber, where the oil inlet flow channel includes four sub-flow channels, a plurality of the sub-flow channels are evenly distributed on a circumference of the guide cylinder, and the spring chamber is respectively communicated with the oil inlet flow channel and the oil inlet chamber; and the spring is movably arranged between the spring chamber and the compression chamber, the oil inlet limiting block is threadedly connected to the bearing housing and is located inside the bearing housing, the oil inlet limiting block is provided with an oil inlet, and an end of the oil inlet limiting block is in contact with a tapered end of the guide cylinder.

The oil inlet chamber, the compression chamber and the oil outlet are all arranged in a vertical direction, and central axes of the oil inlet chamber, the compression chamber and the oil outlet are coaxial.

The bearing housing structure for automatically adjusting oil inlet characteristics further includes a gasket, and the gasket is fixedly connected to the bearing housing and is located inside the bearing housing.

The present invention further provides a method for automatically adjusting oil inlet characteristics, and the method includes the following steps:
assembling; and
determining the relationship between an oil pressure of the oil inlet and an elastic restoring force provided by the spring.

In the step of assembling:
the oil inlet chamber, the compression chamber and the oil outlet are arranged on the bearing housing, the spring is installed in the guide cylinder, the guide cylinder is installed in the compression chamber, and the oil inlet limiting block is tightened after the gasket is placed.

In the step of determining the relationship between an oil pressure of the oil inlet and an elastic restoring force provided by the spring:
when the oil pressure of the oil inlet is excessive for the elastic restoring force provided by the spring, oil pushes the guide cylinder with the tapered end to compress the spring and move toward the oil outlet; and in this case, the guide cylinder is away from the oil inlet limiting block, a gap is generated therebetween, and the lubricating oil enters the oil inlet chamber through the gap, then flows out of the oil outlet after passing through the oil inlet flow channel, and finally flows into each lubricating oil channel of a supercharger to lubricate supercharger bearings.

In the step of determining the relationship between an oil pressure of the oil inlet and an elastic restoring force provided by the spring:
when the oil pressure of the oil inlet is less than 450 MPa, a compression amount of the spring is less than h; and in this case, a lowest point of the oil inlet flow channel of the guide cylinder is above a bottom surface of the oil inlet chamber, and the oil inlet flow channel is in an open state, such that the lubricating oil can freely pass through the oil inlet flow channel.

In the step of determining the relationship between an oil pressure of the oil inlet and an elastic restoring force provided by the spring:
when the oil pressure of the oil inlet reaches 450 MPa, the compression amount of the spring is equal to h; and in this case, the lowest point of the oil inlet flow channel of the guide cylinder is level with the bottom surface of the oil inlet chamber, and the oil inlet flow channel is in an open state, such that the lubricating oil can freely pass through the oil inlet flow channel.

In the step of determining the relationship between an oil pressure of the oil inlet and an elastic restoring force provided by the spring:
when the oil pressure of the oil inlet is greater than 450 MPa, the compression amount of the spring is greater than h; in this case, the lowest point of the oil inlet flow channel is lower than the bottom surface of the oil inlet chamber, the oil inlet flow channel is blocked by the compression chamber, and the oil inlet flow channel is in a semi-closed state; and in this case, the oil inlet flow channel becomes smaller, which limits flow of the lubricating oil into the oil inlet flow channel and controls the oil pressure and mass upon entry into the supercharger.

According to the bearing housing structure and method for automatically adjusting oil inlet characteristics, when the oil pressure of the oil inlet is excessive for the elastic restoring force provided by the spring, oil pushes the guide cylinder with the tapered end to compress the spring and move toward the oil outlet; and in this case, the guide cylinder is away from the oil inlet limiting block, a gap is generated therebetween, and the lubricating oil enters the oil inlet chamber through the gap, then flows out of the oil outlet after passing through the oil inlet flow channel, and finally flows into each lubricating oil channel of a supercharger to lubricate supercharger bearings; when the oil pressure of the oil inlet is less than 450 MPa, a compression amount of the spring is less than h; and in this case, a lowest point of the oil inlet flow channel of the guide cylinder is above a bottom surface of the oil inlet chamber, and the oil inlet flow channel is in an open state, such that the lubricating oil can freely pass through the oil inlet flow channel; when the oil pressure of the oil inlet reaches 450 MPa, the compression amount of the spring is equal to h; and in this case, the lowest point of the oil inlet flow channel of the guide cylinder is level with the bottom surface of the oil inlet chamber, and the oil inlet flow channel is in an open state, such that the lubricating oil can freely pass through the oil inlet flow channel; and when the oil pressure of the oil inlet is greater than 450 MPa, the compression amount of the spring is greater than h, in this case, the lowest point of the oil inlet flow channel is lower than the bottom surface of the oil inlet chamber, the oil inlet flow channel is blocked by the compression chamber, and the oil inlet flow channel is in a semi-closed state, and in this case, the oil inlet flow channel becomes smaller, which limits flow of the lubricating oil into the oil inlet flow channel, controls the oil pressure and mass upon entry into the supercharger, prevents oil leaking from a sealing device towards a turbine and a compressor due to an excessive oil pressure, reduces consumption of lubricating oil, avoids engine combustion deterioration, and improves performance and lifespan of an engine.

### BRIEF DESCRIPTION OF DRAWINGS

In order to more clearly illustrate technical solutions in the examples of the present invention or in the prior art, a brief introduction to the drawings required for the examples or the description of the prior art will be provided below. Obviously, the drawings in the following description are only some of the examples of the present invention, and those of ordinary skill in the art would also be able to derive other drawings from these drawings without making creative efforts.
FIG. 1 is a schematic diagram of an overall structure of a bearing housing structure for automatically adjusting oil inlet characteristics of the present invention.
FIG. 2 is an enlarged view of a bearing housing structure for automatically adjusting oil inlet characteristics of the present invention.
FIG. 3 is a structural schematic diagram of a guide cylinder of the present invention.
bearing housing, 2-oil inlet limiting block, 3-gasket, 4-guide cylinder, 5-spring, 11-oil inlet chamber, 12-compression chamber, 13-oil outlet, 21-oil inlet, 41-oil inlet flow channel, and 42-spring chamber.

### DETAILED DESCRIPTION OF THE EMBODIMENTS

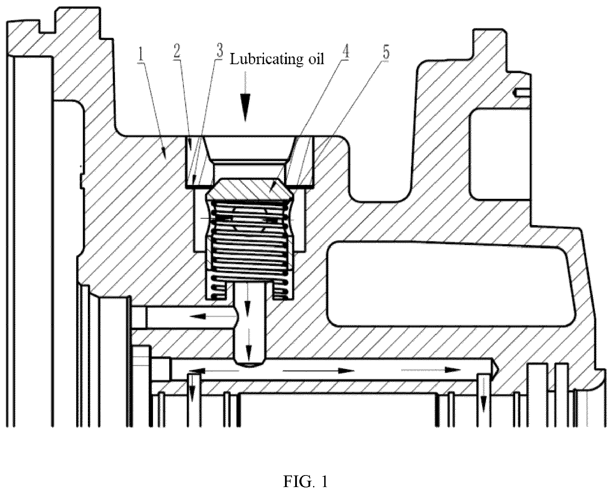

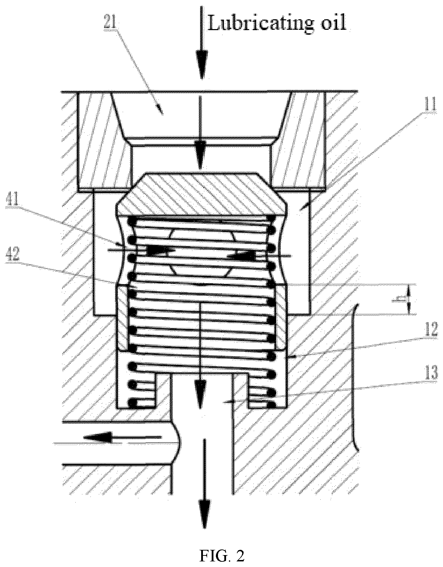

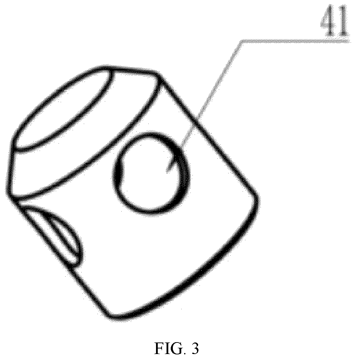

Please refer to FIGs. 1-3, where FIG. 1 is a schematic diagram of an overall structure of a bearing housing structure for automatically adjusting oil inlet characteristics, FIG. 2 is an enlarged view of a bearing housing structure for automatically adjusting oil inlet characteristics, and FIG. 3 is a structural schematic diagram of a guide cylinder.

The present invention provides a bearing housing structure for automatically adjusting oil inlet characteristics. The bearing housing structure includes a bearing housing 1, an oil inlet limiting block 2, a guide cylinder 4 and a spring 5. The bearing housing 1 is provided with an oil inlet chamber 11, a compression chamber 12 and an oil outlet 13, where the compression chamber 12 is arranged between the oil inlet chamber 11 and the oil outlet 13, and the guide cylinder 4 is arranged in the oil inlet chamber 11. The guide cylinder 4 is provided with an oil inlet flow channel 41 and a spring chamber 42, where the oil inlet flow channel 41 includes four sub-flow channels, a plurality of the sub-flow channels are evenly distributed on a circumference of the guide cylinder 4, and the spring chamber 42 is respectively communicated with the oil inlet flow channel 41 and the oil inlet chamber 11. The spring 5 is movably arranged between the spring chamber 42 and the compression chamber 12, the oil inlet limiting block 2 is threadedly connected to the bearing housing 1 and is located inside the bearing housing 1, the oil inlet limiting block 2 is provided with an oil inlet 21, and an end of the oil inlet limiting block 2 is in contact with a tapered end of the guide cylinder 4.

Further, the oil inlet chamber 11, the compression chamber 12 and the oil outlet 13 are all arranged in a vertical direction, and central axes of the oil inlet chamber 11, the compression chamber 12 and the oil outlet 13 are coaxial.

Further, the bearing housing structure for automatically adjusting oil inlet characteristics further includes a gasket 3, and the gasket 3 is fixedly connected to the bearing housing 1 and is located inside the bearing housing 1.

In this embodiment, one end of the oil inlet limiting block 2 is connected to an oil inlet pipe, and the other end of the oil inlet limiting block 2 is in contact with the tapered end of the guide cylinder 4 to form a linear sealing structure. The spring 5 is movably arranged between the spring chamber 42 and the compression chamber 12, the spring 5 is configured for providing an elastic restoring force for the guide cylinder 4 to move toward the oil outlet 13, and the spring chamber 42 limits the spring 5 to prevent the spring 5 from detaching from the spring chamber 42. The gasket 3 cooperates with the oil inlet limiting block 2 to achieve a sealing effect so as to prevent lubricating oil from leaking from a threaded area of the oil inlet limiting block 2.

The present invention further provides a method for automatically adjusting oil inlet characteristics, and the method includes the following steps:
assemble; and
determine the relationship between an oil pressure of the oil inlet 21 and an elastic restoring force provided by the spring 5.

Further, in the step of assembling:
The oil inlet chamber 11, the compression chamber 12 and the oil outlet 13 are arranged on the bearing housing 1, the spring 5 is installed in the guide cylinder 4, the guide cylinder 4 is installed in the compression chamber 12, and the oil inlet limiting block 2 is tightened after the gasket 3 is placed.

Further, in the step of determining the relationship between an oil pressure of the oil inlet 21 and an elastic restoring force provided by the spring 5:
When the oil pressure of the oil inlet 21 is excessive for the elastic restoring force provided by the spring 5, oil pushes the guide cylinder 4 with the tapered end to compress the spring 5 and move toward the oil outlet 13. In this case, the guide cylinder 4 is away from the oil inlet limiting block 2, a gap is generated therebetween, and the lubricating oil enters the oil inlet chamber 11 through the gap, then flows out of the oil outlet 13 after passing through the oil inlet flow channel 41, and finally flows into each lubricating oil channel of a supercharger to lubricate supercharger bearings.

Further, in the step of determining the relationship between an oil pressure of the oil inlet 21 and an elastic restoring force provided by the spring 5:
When the oil pressure of the oil inlet 21 is less than 450 MPa, a compression amount of the spring 5 is less than h. In this case, a lowest point of the oil inlet flow channel 41 of the guide cylinder 4 is above a bottom surface of the oil inlet chamber 11, and the oil inlet flow channel 41 is in an open state, such that the lubricating oil can freely pass through the oil inlet flow channel 41.

Further, in the step of determining the relationship between an oil pressure of the oil inlet 21 and an elastic restoring force provided by the spring 5:
When the oil pressure of the oil inlet 21 reaches 450 MPa, the compression amount of the spring 5 is equal to h. In this case, the lowest point of the oil inlet flow channel 41 of the guide cylinder 4 is level with the bottom surface of the oil inlet chamber 11, and the oil inlet flow channel 41 is in an open state, such that the lubricating oil can freely pass through the oil inlet flow channel 41.

Further, in the step of determining the relationship between an oil pressure of the oil inlet 21 and an elastic restoring force provided by the spring 5:
When the oil pressure of the oil inlet 21 is greater than 450 MPa, the compression amount of the spring 5 is greater than h. In this case, the lowest point of the oil inlet flow channel 41 is lower than the bottom surface of the oil inlet chamber 11, the oil inlet flow channel 41 is blocked by the compression chamber 12, and the oil inlet flow channel 41 is in a semi-closed state. In this case, the oil inlet flow channel 41 becomes smaller, which limits flow of the lubricating oil into the oil inlet flow channel 41 and controls the oil pressure and mass upon entry into the supercharger.

In this embodiment, assembly is first performed, and the assembly process is as follows: the oil inlet chamber 11, the compression chamber 12 and the oil outlet 13 are arranged on the bearing housing 1, the spring 5 is installed in the guide cylinder 4, the guide cylinder 4 is installed in the compression chamber 12, and the oil inlet limiting block 2 is tightened after the gasket 3 is placed; after the assembly is completed, one end of the oil inlet limiting block 2 is connected to the oil inlet pipe, and oil is input to determine the relationship between an oil pressure of the oil inlet 21 and an elastic restoring force provided by the spring 5: when the oil pressure of the oil inlet 21 is excessive for the elastic restoring force provided by the spring 5, oil pushes the guide cylinder 4 with the tapered end to compress the spring 5 and move toward the oil outlet 13, and in this case, the guide cylinder 4 is away from the oil inlet limiting block 2, a gap is generated therebetween, and the lubricating oil enters the oil inlet chamber 11 through the gap, then flows out of the oil outlet 13 after passing through the oil inlet flow channel 41, and finally flows into each lubricating oil channel of the supercharger to lubricate the supercharger bearings; when the oil pressure of the oil inlet 21 is less than 450 MPa, the compression amount of the spring 5 is less than h, and in this case, the lowest point of the oil inlet flow channel 41 of the guide cylinder 4 is above the bottom surface of the oil inlet chamber 11, and the oil inlet flow channel 41 is in the open state, such that the lubricating oil can freely pass through the oil inlet flow channel 41; when the oil pressure of the oil inlet 21 reaches 450 MPa, the compression amount of the spring 5 is equal to h, and in this case, the lowest point of the oil inlet flow channel 41 of the guide cylinder 4 is level with the bottom surface of the oil inlet chamber 11, and the oil inlet flow channel 41 is in an open state, such that the lubricating oil can freely pass through the oil inlet flow channel 41; and when the oil pressure of the oil inlet 21 is greater than 450 MPa, the compression amount of the spring 5 is greater than h, in this case, the lowest point of the oil inlet flow channel 41 is lower than the bottom surface of the oil inlet chamber 11,the oil inlet flow channel 41 is blocked by the compression chamber 12, and the oil inlet flow channel 41 is in the semi-closed state, and in this case, the oil inlet flow channel 41 becomes smaller, which limits the flow of the lubricating oil into the oil inlet flow channel 41, controls the oil pressure and mass upon entry into the supercharger, prevents oil leaking from a sealing device towards a turbine and a compressor due to an excessive oil pressure, reduces consumption of the lubricating oil, avoids engine combustion deterioration, and improves performance and lifespan of a diesel engine.

## Claims

1. A bearing housing structure for automatically adjusting oil inlet characteristics, **characterized by** comprising: a bearing housing (1), an oil inlet limiting block (2), a guide cylinder (4) and a spring (5); the bearing housing (1) is provided with an oil inlet chamber (11), a compression chamber (12) and an oil outlet (13), wherein the compression chamber (12) is arranged between the oil inlet chamber (11) and the oil outlet (13), and the guide cylinder (4) is arranged in the oil inlet chamber (11); the guide cylinder (4) is provided with an oil inlet flow channel (41) and a spring chamber (42), wherein the oil inlet flow channel (41) includes four sub-flow channels, a plurality of the sub-flow channels are evenly distributed on a circumference of the guide cylinder (4), and the spring chamber (42) is respectively communicated with the oil inlet flow channel (41) and the oil inlet chamber (11); and the spring (5) is movably arranged between the spring chamber (42) and the compression chamber (12), the oil inlet limiting block (2) is threadedly connected to the bearing housing (1) and is located inside the bearing housing (1), the oil inlet limiting block (2) is provided with an oil inlet (21), and an end of the oil inlet limiting block (2) is in contact with a tapered end of the guide cylinder (4).

2. The bearing housing structure for automatically adjusting oil inlet characteristics according to claim 1, **characterized in that**
the oil inlet chamber, the compression chamber and the oil outlet are all arranged in a vertical direction, and central axes of the oil inlet chamber, the compression chamber and the oil outlet are coaxial.

3. The bearing housing structure for automatically adjusting oil inlet characteristics according to claim 2, **characterized in that**
the bearing housing structure for automatically adjusting oil inlet characteristics further comprises a gasket, and the gasket is fixedly connected to the bearing housing and is located inside the bearing housing.

4. A method for automatically adjusting oil inlet characteristics, applied to the bearing housing structure for automatically adjusting oil inlet characteristics according to claim 3, **characterized by** comprising the following steps:
assembling; and
determining the relationship between an oil pressure of the oil inlet and an elastic restoring force provided by the spring.

5. The method for automatically adjusting oil inlet characteristics according to claim 4, **characterized in that** in the step of assembling: the oil inlet chamber, the compression chamber and the oil outlet are arranged on the bearing housing, the spring is installed in the guide cylinder, the guide cylinder is installed in the compression chamber, and the oil inlet limiting block is tightened after the gasket is placed.

6. The method for automatically adjusting oil inlet characteristics according to claim 5, **characterized in that** in the step of determining the relationship between an oil pressure of the oil inlet and an elastic restoring force provided by the spring:
when the oil pressure of the oil inlet is excessive for the elastic restoring force provided by the spring, oil pushes the guide cylinder with the tapered end to compress the spring and move toward the oil outlet; and in this case, the guide cylinder is away from the oil inlet limiting block, a gap is generated therebetween, and the lubricating oil enters the oil inlet chamber through the gap, then flows out of the oil outlet after passing through the oil inlet flow channel, and finally flows into each lubricating oil channel of a supercharger to lubricate supercharger bearings.

7. The method for automatically adjusting oil inlet characteristics according to claim 5, **characterized in that** in the step of determining the relationship between an oil pressure of the oil inlet and an elastic restoring force provided by the spring:
when the oil pressure of the oil inlet is less than 450 MPa, a compression amount of the spring is less than h; and in this case, a lowest point of the oil inlet flow channel of the guide cylinder is above a bottom surface of the oil inlet chamber, and the oil inlet flow channel is in an open state, such that the lubricating oil can freely pass through the oil inlet flow channel.

8. The method for automatically adjusting oil inlet characteristics according to claim 5, **characterized in that** in the step of determining the relationship between an oil pressure of the oil inlet and an elastic restoring force provided by the spring:
when the oil pressure of the oil inlet reaches 450 MPa, the compression amount of the spring is equal to h; and in this case, the lowest point of the oil inlet flow channel of the guide cylinder is level with the bottom surface of the oil inlet chamber, and the oil inlet flow channel is in an open state, such that the lubricating oil can freely pass through the oil inlet flow channel.

9. The method for automatically adjusting oil inlet characteristics according to claim 5, **characterized in that** in the step of determining the relationship between an oil pressure of the oil inlet and an elastic restoring force provided by the spring:
when the oil pressure of the oil inlet is greater than 450 MPa, the compression amount of the spring is greater than h; in this case, the lowest point of the oil inlet flow channel is lower than the bottom surface of the oil inlet chamber, the oil inlet flow channel is blocked by the compression chamber, and the oil inlet flow channel is in a semi-closed state; and in this case, the oil inlet flow channel becomes smaller, which limits flow of the lubricating oil into the oil inlet flow channel and controls the oil pressure and mass upon entry into the supercharger.

## Patentansprüche

1. Lagergehäusestruktur zum automatischen Einstellen einer Öleinlasscharakteristik, **dadurch gekennzeichnet, dass** sie umfasst: ein Lagergehäuse (1), einen Öleinlassbegrenzungsblock (2), einen Führungszylinder (4) und eine Feder (5); wobei das Lagergehäuse (1) mit einer Öleinlasskammer (11), einer Kompressionskammer (12) und einem Ölauslass (13) versehen ist, wobei die Kompressionskammer (12) zwischen der Öleinlasskammer (11) und dem Ölauslass (13) angeordnet ist und der Führungszylinder (4) in der Öleinlasskammer (11) angeordnet ist; wobei der Führungszylinder (4) mit einem Öleinlassströmungskanal (41) und einer Federkammer (42) versehen ist, wobei der Öleinlassströmungskanal (41) vier Teilströmungskanäle umfasst, wobei mehrere dieser Teilströmungskanäle gleichmäßig über den Umfang des Führungszylinders (4) verteilt angeordnet sind, und die Federkammer (42) jeweils mit dem Öleinlassströmungskanal (41) und der Öleinlasskammer (11) in Verbindung steht; und wobei die Feder (5) beweglich zwischen der Federkammer (42) und der Kompressionskammer (12) angeordnet ist, der Öleinlassbegrenzungsblock (2) gewindemäßig mit dem Lagergehäuse (1) verbunden und innerhalb des Lagergehäuses (1) angeordnet ist, der Öleinlassbegrenzungsblock (2) mit einem Öleinlass (21) versehen ist und ein Ende des Öleinlassbegrenzungsblocks (2) mit einem konischen Ende des Führungszylinders (4) in Kontakt steht.

2. Lagergehäusestruktur zum automatischen Einstellen einer Öleinlasscharakteristik nach Anspruch 1, **dadurch gekennzeichnet, dass**
die Öleinlasskammer, die Kompressionskammer und der Ölauslass sämtlich vertikal angeordnet sind und die Mittelachsen der Öleinlasskammer, der Kompressionskammer und des Ölauslasses koaxial zueinander verlaufen.

3. Lagergehäusestruktur zum automatischen Einstellen einer Öleinlasscharakteristik nach Anspruch 2, **dadurch gekennzeichnet, dass**
die Lagergehäusestruktur zum automatischen Einstellen einer Öleinlasscharakteristik ferner eine Dichtung umfasst, wobei die Dichtung fest mit dem Lagergehäuse verbunden und im Inneren des Lagergehäuses angeordnet ist.

4. Verfahren zum automatischen Einstellen einer Öleinlasscharakteristik, angewendet auf die Lagergehäusestruktur zum automatischen Einstellen einer Öleinlasscharakteristik nach Anspruch 3, **dadurch gekennzeichnet, dass** es die folgenden Schritte umfasst:
Montieren; und
Bestimmen der Beziehung zwischen einem Öldruck des Öleinlasses und einer durch die Feder bereitgestellten elastischen Rückstellkraft.

5. Verfahren zum automatischen Einstellen einer Öleinlasscharakteristik nach Anspruch 4, **dadurch gekennzeichnet, dass** im Schritt des Montierens: die Öleinlasskammer, die Kompressionskammer und der Ölauslass am Lagergehäuse angeordnet werden, die Feder in den Führungszylinder eingesetzt wird, der Führungszylinder in die Kompressionskammer eingesetzt wird und der Öleinlassbegrenzungsblock nach dem Einsetzen der Dichtung festgezogen wird.

6. Verfahren zum automatischen Einstellen einer Öleinlasscharakteristik nach Anspruch 5, **dadurch gekennzeichnet, dass** im Schritt des Bestimmens der Beziehung zwischen einem Öldruck des Öleinlasses und einer durch die Feder bereitgestellten elastischen Rückstellkraft:
wenn der Öldruck des Öleinlasses die durch die Feder bereitgestellte elastische Rückstellkraft übersteigt, das Öl den Führungszylinder mit dem konischen Ende drückt, um die Feder zu komprimieren und sich in Richtung des Ölauslasses zu bewegen; und wobei sich in diesem Fall der Führungszylinder vom Öleinlassbegrenzungsblock entfernt, wodurch dazwischen ein Spalt entsteht, das Schmieröl durch den Spalt in die Öleinlasskammer eintritt, den Öleinlassströmungskanal durchströmt, anschließend aus dem Ölauslass austritt und schließlich in jeden Schmierölkanal eines Laders strömt, um dessen Lagerungen zu schmieren.

7. Verfahren zum automatischen Einstellen einer Öleinlasscharakteristik nach Anspruch 5, **dadurch gekennzeichnet, dass** im Schritt des Bestimmens der Beziehung zwischen einem Öldruck des Öleinlasses und einer durch die Feder bereitgestellten elastischen Rückstellkraft:
wenn der Öldruck des Öleinlasses weniger als 450 MPa beträgt, die Kompression der Feder kleiner als h ist; und wobei in diesem Fall der tiefste Punkt des Öleinlassströmungskanals des Führungszylinders oberhalb der Bodenfläche der Öleinlasskammer liegt und sich der Öleinlassströmungskanal in einem offenen Zustand befindet, sodass das Schmieröl den Öleinlassströmungskanal frei durchströmen kann.

8. Verfahren zum automatischen Einstellen einer Öleinlasscharakteristik nach Anspruch 5, **dadurch gekennzeichnet, dass** im Schritt des Bestimmens der Beziehung zwischen einem Öldruck des Öleinlasses und einer durch die Feder bereitgestellten elastischen Rückstellkraft:
wenn der Öldruck des Öleinlasses 450 MPa erreicht, die Kompression der Feder gleich h ist; und wobei in diesem Fall der tiefste Punkt des Öleinlassströmungskanals des Führungszylinders auf gleicher Höhe mit der Bodenfläche der Öleinlasskammer liegt und sich der Öleinlassströmungskanal in einem offenen Zustand befindet, sodass das Schmieröl den Öleinlassströmungskanal frei durchströmen kann.

9. Verfahren zum automatischen Einstellen einer Öleinlasscharakteristik nach Anspruch 5, **dadurch gekennzeichnet, dass** im Schritt des Bestimmens der Beziehung zwischen einem Öldruck des Öleinlasses und einer durch die Feder bereitgestellten elastischen Rückstellkraft: wenn
der Öldruck des Öleinlasses größer als 450 MPa ist, die Kompression der Feder größer als h ist; wobei in diesem Fall der tiefste Punkt des Öleinlassströmungskanals tiefer als die Bodenfläche der Öleinlasskammer liegt, der Öleinlassströmungskanal durch die Kompressionskammer blockiert wird und sich der Öleinlassströmungskanal in einem halbgeschlossenen Zustand befindet; und wobei sich in diesem Fall der Öleinlassströmungskanal verkleinert, wodurch der Zustrom des Schmieröls in den Öleinlassströmungskanal begrenzt und der Öldruck sowie die Ölmenge beim Eintritt in den Lader gesteuert werden.

## Revendications

1. Une structure de logement de palier pour le réglage automatique de caractéristiques d'admission d'huile, **caractérisée en ce qu'**elle comprend : un logement de palier (1), un bloc de limitation d'admission d'huile (2), un cylindre de guidage (4) et un ressort (5) ; le logement de palier (1) est pourvu d'une chambre d'admission d'huile (11), d'une chambre de compression (12) et d'une sortie d'huile (13), la chambre de compression (12) étant disposée entre la chambre d'admission d'huile (11) et la sortie d'huile (13), et le cylindre de guidage (4) étant disposé dans la chambre d'admission d'huile (11) ; le cylindre de guidage (4) est pourvu d'un canal d'écoulement d'admission d'huile (41) et d'une chambre de ressort (42), le canal d'écoulement d'admission d'huile (41) comprenant quatre sous-canaux d'écoulement, une pluralité desdits sous-canaux d'écoulement étant répartis uniformément sur une circonférence du cylindre de guidage (4), et la chambre de ressort (42) communiquant respectivement avec le canal d'écoulement d'admission d'huile (41) et la chambre d'admission d'huile (11) ; le ressort (5) est disposé de manière mobile entre la chambre de ressort (42) et la chambre de compression (12), le bloc de limitation d'admission d'huile (2) est raccordé par filetage au logement de palier (1) et est situé à l'intérieur du logement de palier (1), le bloc de limitation d'admission d'huile (2) est pourvu d'une admission d'huile (21), et une extrémité du bloc de limitation d'admission d'huile (2) est en contact avec une extrémité conique du cylindre de guidage (4).

2. La structure de logement de palier pour le réglage automatique de caractéristiques d'admission d'huile selon la revendication 1, **caractérisée en ce que**
la chambre d'admission d'huile, la chambre de compression et la sortie d'huile sont toutes disposées selon une direction verticale, et **en ce que** les axes centraux de la chambre d'admission d'huile, de la chambre de compression et de la sortie d'huile sont coaxiaux.

3. La structure de logement de palier pour le réglage automatique de caractéristiques d'admission d'huile selon la revendication 2, **caractérisée en ce que**
ladite structure comprend en outre un joint, ledit joint étant fixé au logement de palier et étant situé à l'intérieur du logement de palier.

4. Un procédé de réglage automatique de caractéristiques d'admission d'huile, appliqué à la structure de logement de palier pour le réglage automatique de caractéristiques d'admission d'huile selon la revendication 3, **caractérisé en ce qu'**il comprend les étapes suivantes :
l'assemblage ; et
la détermination de la relation entre la pression d'huile à l'admission d'huile et une force de rappel élastique fournie par le ressort.

5. Le procédé de réglage automatique de caractéristiques d'admission d'huile selon la revendication 4, **caractérisé en ce que**, lors de l'étape d'assemblage : la chambre d'admission d'huile, la chambre de compression et la sortie d'huile sont disposées sur le logement de palier, le ressort est installé dans le cylindre de guidage, le cylindre de guidage est installé dans la chambre de compression, et le bloc de limitation d'admission d'huile est serré après la mise en place du joint.

6. Le procédé de réglage automatique de caractéristiques d'admission d'huile selon la revendication 5, **caractérisé en ce que**, lors de l'étape de détermination de la relation entre la pression d'huile à l'admission d'huile et une force de rappel élastique fournie par le ressort :
lorsque la pression d'huile à l'admission d'huile est excessive par rapport à la force de rappel élastique fournie par le ressort, l'huile pousse le cylindre de guidage présentant une extrémité conique de manière à comprimer le ressort et à déplacer le cylindre de guidage vers la sortie d'huile ; et, dans ce cas, le cylindre de guidage s'éloigne du bloc de limitation d'admission d'huile, un jeu est généré entre eux, et l'huile de lubrification pénètre dans la chambre d'admission d'huile à travers ledit jeu, puis s'écoule hors de la sortie d'huile après avoir traversé le canal d'écoulement d'admission d'huile, et pénètre enfin dans chaque canal de lubrification d'un compresseur de suralimentation pour lubrifier les paliers du compresseur de suralimentation.

7. Le procédé de réglage automatique de caractéristiques d'admission d'huile selon la revendication 5, **caractérisé en ce que**, lors de l'étape de détermination de la relation entre la pression d'huile à l'admission d'huile et une force de rappel élastique fournie par le ressort :
lorsque la pression d'huile à l'admission d'huile est inférieure à 450 MPa, une quantité de compression du ressort est inférieure à h ; et, dans ce cas, un point le plus bas du canal d'écoulement d'admission d'huile du cylindre de guidage est situé au-dessus d'une surface inférieure de la chambre d'admission d'huile, et le canal d'écoulement d'admission d'huile est dans un état ouvert, de telle sorte que l'huile de lubrification peut traverser librement le canal d'écoulement d'admission d'huile.

8. Le procédé de réglage automatique de caractéristiques d'admission d'huile selon la revendication 5, **caractérisé en ce que**, lors de l'étape de détermination de la relation entre la pression d'huile à l'admission d'huile et une force de rappel élastique fournie par le ressort :
lorsque la pression d'huile à l'admission d'huile atteint 450 MPa, la quantité de compression du ressort est égale à h ; et, dans ce cas, le point le plus bas du canal d'écoulement d'admission d'huile du cylindre de guidage est de niveau avec la surface inférieure de la chambre d'admission d'huile, et le canal d'écoulement d'admission d'huile est dans un état ouvert, de telle sorte que l'huile de lubrification peut traverser librement le canal d'écoulement d'admission d'huile.

9. Le procédé de réglage automatique de caractéristiques d'admission d'huile selon la revendication 5, **caractérisé en ce que**, lors de l'étape de détermination de la relation entre la pression d'huile à l'admission d'huile et une force de rappel élastique fournie par le ressort :
lorsque la pression d'huile à l'admission d'huile est supérieure à 450 MPa, la quantité de compression du ressort est supérieure à h ; dans ce cas, le point le plus bas du canal d'écoulement d'admission d'huile est situé au-dessous de la surface inférieure de la chambre d'admission d'huile, le canal d'écoulement d'admission d'huile est obturé par la chambre de compression, et le canal d'écoulement d'admission d'huile est dans un état semi-fermé ; et, dans ce cas, le canal d'écoulement d'admission d'huile devient plus étroit, ce qui limite l'écoulement de l'huile de lubrification dans le canal d'écoulement d'admission d'huile et permet de contrôler la pression et la masse d'huile à l'entrée du compresseur de suralimentation.
